# EUROPEAN PATENT SPECIFICATION

(11) **EP 1 998 926 B1**
(45) Date of publication and mention of the grant of the patent: **15.08.2012**
(21) Application number: 07737750.5
(22) Date of filing: 27.02.2007
(51) Int. Cl.: B23K 3/03, F16L 37/098

(54) **CARTRIDGE TYPE SOLDERING IRON WITH LOCKING MECHANISM BETWEEN A SLEEVE STOPPER AND A SOCKET**
PATRONEN-LÖTKOLBEN MIT VERRIEGELUNGSMECHANISMUS ZWISCHEN EINEM HÜLSENANSCHLAG UND EINER BUCHSE
FER A SOUDER DU TYPE A CARTOUCHE AVEC MECANISME DE VERROUILLAGE ENTRE UNE BUTEE DE MANCHON ET UNE DOUILLE

(30) Priority: 28.02.2006 US 365216
(43) Date of publication of application: 10.12.2008
(73) Proprietor: Hakko Corporation, Osaka-shi, Osaka 556-0024 (JP)
(72) Inventor: MIYAZAKI, Mitsuhiko, Osaka-shi, Osaka 556-0024 (JP)
(74) Representative: Müller-Boré & Partner Patentanwälte
(86) International application number: PCT/JP2007/054140
(87) International publication number: WO 2007/100129

(56) References cited:
- EP-A- 0 386 948
- EP-A- 1 616 653
- WO-A-2005/047753
- US-A- 3 245 703
- US-A1- 2005 092 729
- US-A1- 2005 101 691
- US-B1- 6 215 104
- US-B2- 6 710 304

## Description

The present invention relates generally to a cartridge type soldering iron according to the preamble of claim 1 (see, for example, US 2005/092729), and in particular to a cartridge type soldering iron having a sleeve assembly and a socket assembly which couple with each other in a locking position.

### Background Art

A cartridge type soldering iron of the type at issue here has a releasable and replaceable tip cartridge. For example, a cartridge type soldering iron is disclosed in U.S. Patent No. 4,839,501 issued to Cowell. Cowell discloses a cartridge type soldering iron which has a hollow cylindrical handle, incorporating an internal coaxial socket assembly, a connection to a power supply, and a cartridge housing support, and a soldering tip, a heater assembly, a tubular housing and a coaxial socket assembly. Another is disclosed in Patent Document 1 to Yokoo, entitled cartridge type soldering iron with a releasable and replaceable handle.
Patent Document 1: U.S. Patent No. 6,710,304

US 2005/092729 discloses a soldering iron which is configured to heat its tip and emit inert gas near the tip, wherein a heater cartridge is provided having a heater pipe with a tip portion and a base portion. The heater pipe has a first hole in the tip portion and a second hole at the base portion. The heater pipe has a passage between the first and second holes so that gas can enter through the second hole and exit through the first hole. The heater cartridge has a grip handle between the tip and base portions of the heater pipe. The soldering iron has a handle base with a cavity adapted to receive the base portion of the heater pipe and at least a portion of the grip handle, wherein the handle base is adapted to provide power and gas to the base portion of the heater pipe and the heater pipe transfers the power and gas from the base portion to the tip portion to heat the tip and emit gas near the tip.

WO 2005/047753 A discloses a device for connecting two rigid tubular objects the device comprising a male part and a female part. The female part consists of a sleeve which at one of its ends is provided with a recess. The male part consists of a tube portion which at one of its ends is provided with a transverse edge which is formed by an indentation arranged in the outer wall, of the male part. A sleeve-shaped element is arranged to be placed between the parts when inserting the male part into the female part. The element is provided with a resilient tongue with a first means which, during insertion of the element into the female part, resiliently engages the recess thereof and a second, which during insertion of the male part into the element, resiliently snaps into place behind the transverse edge of the male part. The resilient tongue allows separation of the female part and the male part by turning of the element relative to the male part to a position where the second means of the resilient tongue is arranged radially outside the transverse edge of the male part. The resilient tongue is, in turning for separation, with a portion in the recess of the female part raised radially outside the transverse edge of the male part.

US 2005/101691 discloses a grip for a tool that is treated with an anti-microbial material to minimize germs from passing from one person to another. The anti-microbial material includes: about 90% by weight of feldspar particles; about 5% by weight of alumina whiskers; about 2% by weight of silver; and about 3% by weight of zinc. The grip can be formed for a variety of tools such as a soldering iron.

EP-A-1 616 653 discloses a battery powered soldering device with a cartridge type battery system which includes a number of different optional battery packs or connections which can be utilized to provide a full range of soldering features in a cartridge type soldering tip device.

US B1-6 215 104 discloses a soldering iron which includes a housing for accommodating therein at least one heating element and a soldering bit which is releasably secured to the housing. The heating element includes a heat-transmitting contact surface provided on an end face thereof which faces the soldering bit. A heat reception surface of the soldering bit is located opposite the contact surface and in direct contact therewith with no intermediate layer therebetween. A temperature sensor is located adjacent the contact surface and between the contact surface and a filament winding of the heating element.

A cartridge type soldering iron according to the present invention is defined in claim 1.

The sleeve can be of any color and can have a circular, hexagonal or polygonal circumference, although its shape can vary as long as it is easy to grip and functions well as a sleeve. The sleeve is made of a non-slip material for an easy and accurate grip and generally non-heat conducting for protection of a user's fingers.

The above described and many other features and attendant advantages of the present invention will become apparent from a consideration of the following detailed description when considered in conjunction with the accompanying drawings.

### Brief Description of the Drawings

Fig. 1 shows a hexagonal sleeve of a cartridge soldering iron according to the present invention.
Fig. 2 shows a sleeve stopper according to the present invention.
Fig. 3 shows the sleeve stopper of Fig. 2 in another view.
Fig. 4 shows the hexagonal sleeve of Fig. 1 coupled with the sleeve stopper shown in Figs. 2 and 3.
Fig. 5 shows a tip cartridge employed in the present invention.
Fig. 6 shows the sleeve stopper and the sleeve engaged with the tip cartridge.

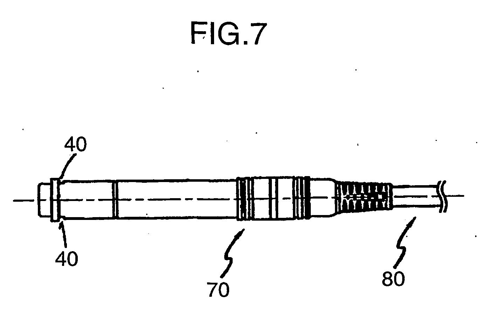

Fig. 7 shows a socket assembly of the soldering iron according to the present invention.

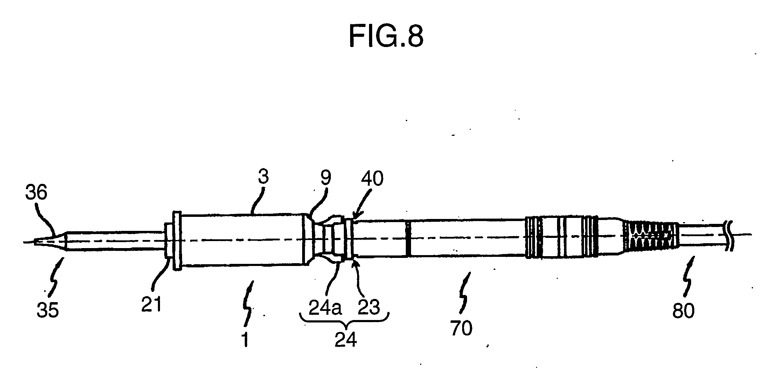

Fig. 8 shows the soldering iron with the sleeve and the sleeve stopper according to the present invention.
Fig. 9 shows a side view of a circular sleeve of the present invention.
Fig. 10 shows a cross-sectional view of the soldering iron of the present invention.

### Best Mode for Carrying Out the Invention

This description is not to be taken in a limited sense, but is made for the purpose of illustrating the general principles of the present invention. The section titles and overall organization of the present detailed description are for the purpose of convenience only and are not intended to limit the present invention.

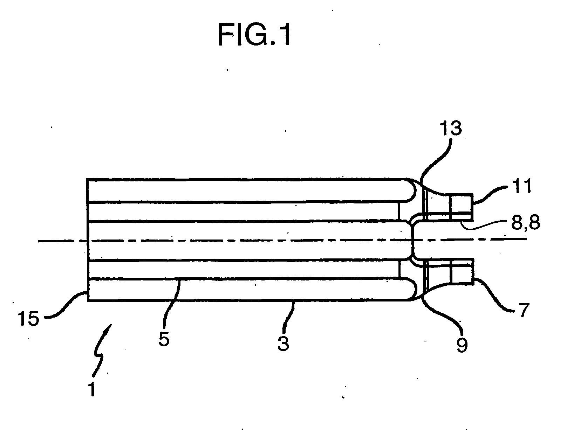

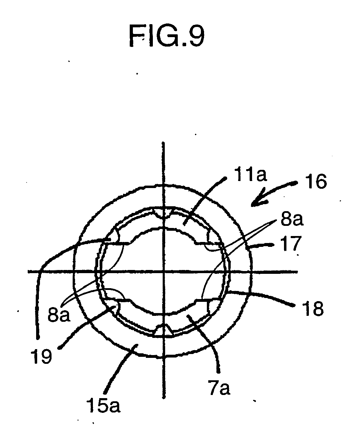

Fig. 1 illustrates by way of example a sleeve 1 for use with a cartridge type soldering iron according to the present invention. The sleeve 1 has a plurality of ridges 3, 5 extending longitudinally, which in this embodiment is hexagonal in circumference. A smooth circular sleeve can also be adopted as well as any other shape as long as the sleeve provides a good grip and is compatible with a below-described sleeve stopper. Fig. 9 shows a cross-sectional view of a circular sleeve 16 of the present invention. The circular sleeve 16 of Fig. 9 is shown from a distal end 15a of the circular sleeve 16. It has a circular outer circumference 17 and another circular interior circumference 18. A plurality of ridges 19 are provided on the interior circumference 18 which run in the longitudinal direction of the circular sleeve 16. There are six ridges 19 provided in this particular embodiment of the circular sleeve 16 shown in Fig. 9. These ridges 19 function as a heat insulator to retard the heat conduction from the heater.

In the hexagonal sleeve 1 of Fig. 1, a distal end 15 ends abruptly while the other end slopes down to a narrower circumference at shoulders 9 and 13 and extends into two tips 7, 11, respectively. The tips 7, 11 define a pair of cutouts 8. In Fig. 9, the circular sleeve 16 has corresponding tips 7a, 11a and a pair of cutouts 8a.

In the embodiments of the present invention shown here, the sleeves 1 and 16 are made of polypropylene. The sleeves 1 and 16 may also be made of a variety of materials that are known to those skilled in the art. These materials include rubber, elastomer and polyolefin and other plastics. Further, an anti-static material and/or an anti-microbial material may be added. Additionally, instead of polypropylene, cork can be used in its place.

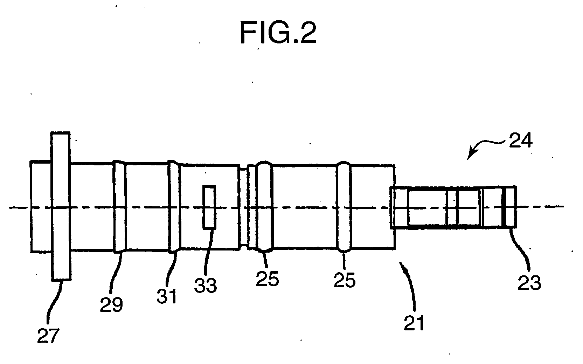

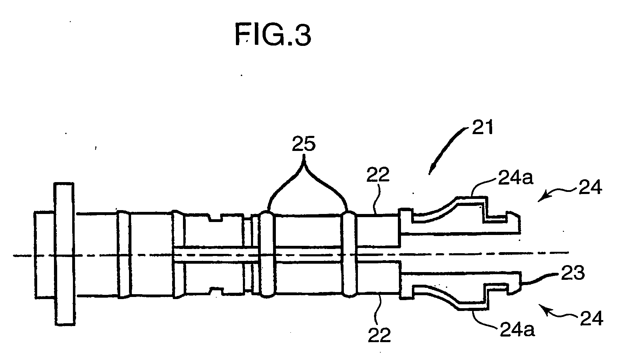

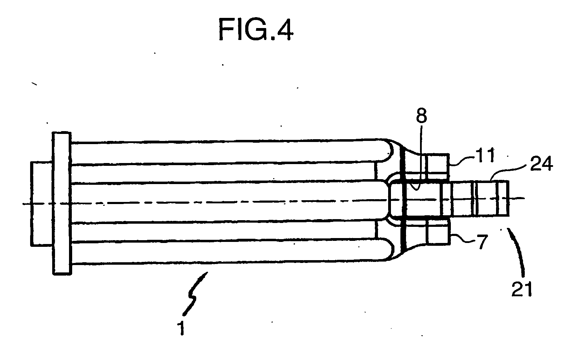

Figs. 2 and 3 show the sleeve stopper 21 having a stop 27 at one end and a pair of hooks 24 at the other end. The hooks 24 have buttons 24a and hook tips 23. A pair of steps 29 and 31 is provided on the body of the sleeve stopper 21 to help provide a snug fit with the sleeve 1. The sleeve stopper 21 defines a pair of apertures 33. A couple of O rings 25 are provided as well. The sleeve stopper 21 slidably couples with the sleeve 1 where hooks 24 are positioned between the tips 7, 11, respectively, as shown in Fig. 4. When the sleeve 1 is inserted over the sleeve stopper 21, the end 15 of the sleeve 1 abuts and is fixed against the stop 27 of the sleeve stopper 21.

The sleeve stopper 21 may be made from an insulating material, for instance, if the heat conduction is such that the sleeve stopper area gets hot from the heat of the tip. The stop 27 of the sleeve stopper 21 may be made from a temperature-sensitive material so that as the soldering iron tip heats up, it indicates to the user of its readiness or bum risk depending on a degree of temperature sensitivity by changing color.

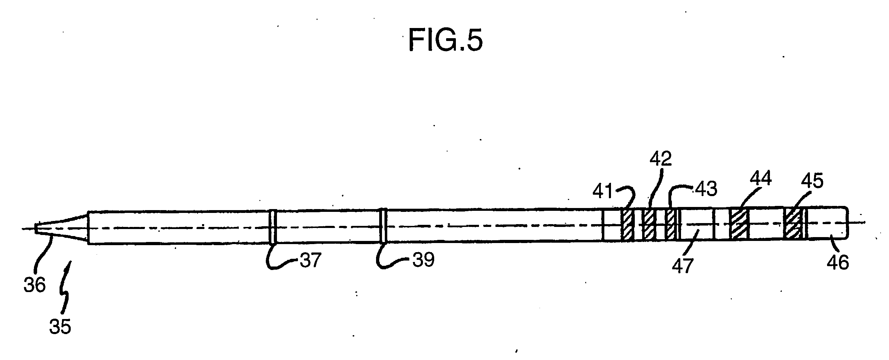

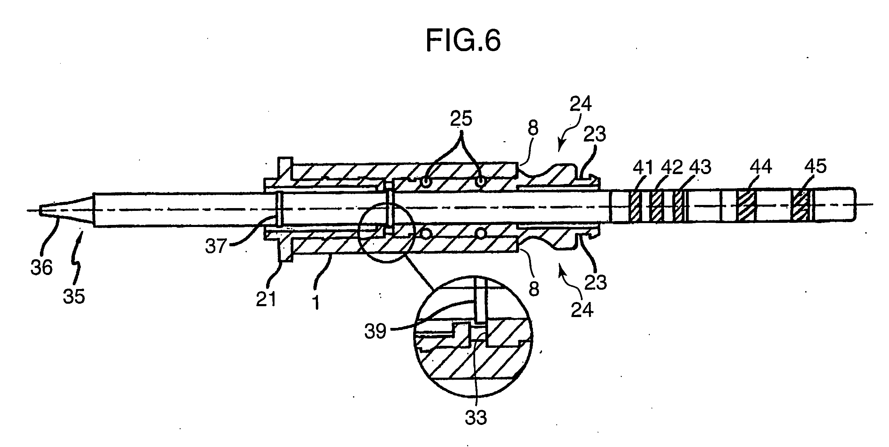

Fig. 5 shows a tip cartridge 35 employed in an embodiment according to the present invention. The tip cartridge 35 has two ridges 37 and 39 defined in its body and bar codes 41, 42, 43. The bar codes 41, 42, 43 identify the type of tip cartridge and its corresponding temperature requirement and are provided on a stainless portion 47 of the tip cartridge 35. A couple of contact points 44 and 45 are provided on a non-electrically conductive material 46. The ridge 39 on the tip cartridge 35, according to the present invention, is used as a tip retaining mechanism. When the tip cartridge 35 is inserted into the sleeve stopper 21, the ridge or the tip retaining mechanism 39 comes to rest at the apertures 33 of the sleeve stopper 21 as can be seen in a cross-sectional view of Fig. 6. The tip cartridge 35 in this way is fixed with respect to the sleeve stopper 21. The sleeve 1 covers the sleeve stopper 21 so as that the cutouts 8 accept the hooks 24. The O rings 25 bind arms 22 to the extent shown in Fig. 3, which leaves a predetermined amount of space between the arms 22. The arms 22 are bound to such an extent so that the hooks 24 slidably hook with the socket assembly 70 at the corresponding apertures 40 and stay hooked through normal use of the solder iron. The O rings 25 also bind to retain and secure the tip cartridge 35 with enough force for the tip cartridge 35 to slidably fit within the sleeve stopper 21 but at the same time to stay secured and not come apart as it sometimes did in prior art systems. At least one of the two O rings 25 may be used.

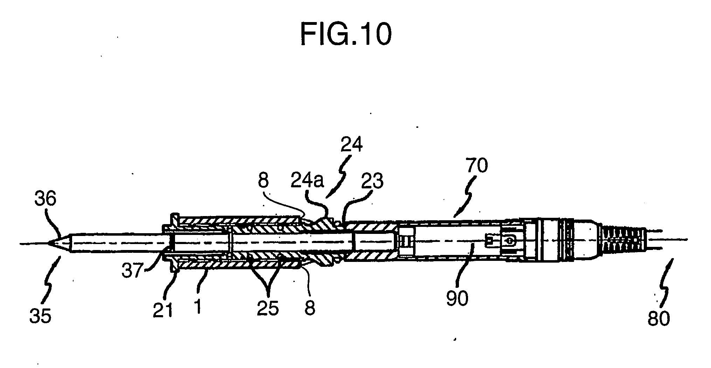

Next, the sleeve stopper 21 is locked with the socket assembly 70 in a following manner. As described above, the sleeve stopper 21 according to the present invention is provided with a pair of hooks 24. When the sleeve assembly composed of the sleeve stopper 21 and the sleeve 1 holds the tip cartridge 35, and the whole combination is inserted into the socket assembly 70, the hook ends 23 slidably lock with the apertures 40 of the socket assembly 70. A cross sectional view of the assembled soldering iron is shown in Fig. 10.

As described above, the sleeve assembly is replaceable in the state holding the tip cartridge 35, and the whole combination containing the sleeve assembly and the tip cartridge 35 can be locked in the socket assembly 70 by the locking mechanism comprising the hooks 24 and the apertures 40.

The socket assembly 70 has a plug (not shown) at the end of an electrical cord 80 to connect to the power source. Fig. 10 shows the socket assembly 70 in its cross-sectional view and shows a connector 90. The contact points 44 and 45 of the tip cartridge 35 are connected with the connector 90 for supplying the power to the tip cartridge 35.

In prior art systems, a socket assembly sometimes comes apart from the rest of the soldering iron. Such disconnection is caused by insufficient fastening or coupling between the socket assembly and the rest of the cartridge type soldering iron. This results because the tip cartridge by itself or together with the rest of the cartridge type soldering iron are simply inserted into the socket assembly and has insufficient mechanical hold onto the socket assembly.

Unlike those types of cartridge type soldering irons, the soldering iron according to the present invention provides a firm, sturdy mechanical coupling between the sleeve assembly on one hand and the socket assembly on the other, through the above-described provision of the locking mechanism. Therefore, the entire cartridge type soldering iron can stay together, and at the same time, the assembly of the tip cartridge with the sleeve stopper and the sleeve may easily replaced.

The cartridge soldering iron of the present invention is easy to use because the locking mechanism is located above the sleeve 1 and out of the way of the grip. Its parts such as the buttons 24a, hook tips 23 are very small and almost flush with the rest of the longitudinal covered surface of the soldering iron.

The practical embodiments described herein are mere examples for illustrating the art of the invention, and the invention is not limited to the foregoing examples alone but should be interpreted in a wider sense including the changes and modifications falling within the scope of the invention as well as defined in the appended claims.

## Claims

1. A cartridge type soldering iron comprising:
a socket assembly (70) connected to an electrical source;
a tip cartridge (35) having a tip retaining mechanism (39); and
a sleeve assembly (1, 16, 21) **characterized in that**:
the sleeve assembly (1, 16, 21) comprises:
a sleeve stopper (21) for holding the tip cartridge (35) having a pair of hooks (24) for locking with the socket assembly (70) and a stop (27); and
a sleeve (1, 16) which is adapted to couple with the sleeve stopper (21), wherein the sleeve (1, 16) defines a pair of cutouts (8) in a first end to accept the hooks (24) and a second end (15) which abuts the stop (27) of the sleeve stopper (21),
wherein the sleeve assembly (1, 16, 21) retains the tip cartridge (35) fixably by the tip retaining mechanism (39) so that the tip cartridge (35) is adapted to slidably couple with the socket assembly (70) and establishing an electrical contact with the socket assembly (70);
wherein the sleeve assembly (1, 16, 21) and the socket assembly (70) are engaged and locked up each other by the hooks (24); and
wherein the hooks (24) are located out of the way of a grip.

2. A cartridge type soldering iron according to claim 1, wherein:
the first end defines a first tip end (7, 7a) and a second tip end (11, 11 a); and
the sleeve stopper (21) is able to couple with the sleeve (1, 16), wherein the first end accepts the hooks (24) between the first tip end (7, 7a) and the second tip end (11, 11 a), respectively.

3. A cartridge type soldering iron according to claim 1 or 2, wherein
the pair of cutouts (8) is defined between the first tip end (7, 7a) and the second tip end (11, 11a) formed at the first end of the sleeve (1, 16).

4. A cartridge type soldering iron according to claim 1 or 2, wherein the sleeve (1, 16) has a hexagonal circumference, a polygonal circumference, or a circular circumference.

5. A cartridge type soldering iron according to claim 1 or 2, wherein the sleeve (1, 16) is made of carbon-impregnated foam, rubber, elastomers, polypropylene, plastics, or cork.,

6. A cartridge type soldering iron according to claim 1 or 2, wherein the sleeve (1, 16) contains at least one of an anti-static material and an anti-microbial material.

7. A cartridge type soldering iron according to claim 1, wherein the socket assembly (70) has a pair of apertures (40) for locking with the hooks (24).

8. A cartridge type soldering iron according to claim 1, wherein the hook (24) has a tip (23) and a button (24a) and each of the tips (23) engages with the socket assembly (70).

## Patentansprüche

1. Patronen-Lötkolben, der umfasst:
eine Sockelanordnung (70), die mit einer elektrischen Quelle verbunden ist;
einen Spitzenpatrone (35) mit einem Spitzenfesthaltemechanismus (39); und
eine Hülsenanordnung (1, 16, 21), **dadurch gekennzeichnet, dass**:
die Hülsenanordnung (1, 16, 21) umfasst:
einen Hülsenanschlag (21) zum Halten der Spitzenpatrone (35) mit einem Paar Haken (24) zum Verriegeln mit der Sockelanordnung (70); und
eine Hülse (1, 16), die geeignet ist, mit dem Hülsenanschlag (21) zu verbinden, wobei die Hülse (1, 16) ein Paar von Ausschnitten (8) in einem ersten Ende definiert, um die Haken (24) aufzunehmen, und ein zweites Ende (15) hat, das an dem Anschlag (27) des Hülsenanschlags (21) anliegt,
wobei die Hülsenanordnung (1, 16, 21) die Spitzenpatrone (35) durch den Spitzenfesthaltemechanismus (39) befestigbar hält, so dass die Spitzenpatrone (35) geeignet ist, verschiebbar mit der Sockelanordnung (70) verbunden zu werden und einen elektrischen Kontakt mit der Sockelanordnung (70) herzustellen;
wobei die Hülsenanordnung (1, 16, 21) und die Sockelanordnung (70) in Eingriff sind und durch die Haken (24) miteinander verriegelt sind; und
wobei die Haken (24) abseits von einem Griff angeordnet sind.

2. Patronen-Lötkolben nach Anspruch 1, wobei:
das erste Ende ein erstes Spitzenende (7, 7a) und ein zweites Spitzenende (11, 11 a) definiert; und
der Hülsenanschlag (21) fähig ist, mit der Hülse (1, 16) zu verbinden, wobei das erste Ende die Haken (24) jeweils zwischen dem ersten Spitzenende (7, 7a) und dem zweiten Spitzenende (11, 11a) aufnimmt.

3. Patronen-Lötkolben nach Anspruch 1 oder 2, wobei
das Paar von Ausschnitten (8) zwischen dem ersten Spitzenende (7, 7a) und dem zweiten Spitzenende (11, 11a), die an dem ersten Ende der Hülse (1, 16) ausgebildet sind, definiert ist.

4. Patronen-Lötkolben nach Anspruch 1 oder 2, wobei die Hülse (1, 16) einen sechseckigen Umfang, einen polygonalen Umfang oder einen kreisförmigen Umfang hat.

5. Patronen-Lötkolben nach Anspruch 1 oder 2, wobei die Hülse (1, 16) aus einem karbonimprägnierten Schaum, Gummi, Elastomeren, Polypropylen, Kunststoff oder Kork gefertigt ist.

6. Patronen-Lötkolben nach Anspruch 1 oder 2, wobei die Hülse (1, 16) ein antistatisches Material und/oder antimikrobielles Material enthält.

7. Patronen-Lötkolben nach Anspruch 1, wobei die Sockelanordnung (70) ein Paar Öffnungen (40) zum Verriegeln mit den Haken (24) hat.

8. Patronen-Lötkolben nach Anspruch 1, wobei der Haken (24) eine Spitze (23) und einen Knopf (24a) hat und jede der Spitzen (23) mit der Sockelanordnung (70) eingreift.

## Revendications

1. Fer à souder du type à cartouche comprenant :
un ensemble douille (70) raccordé à une source électrique ;
une cartouche à pointe (35) ayant un mécanisme de retenue de pointe (39) ; et
un ensemble manchon (1, 16, 21) **caractérisé en ce que** :
l'ensemble manchon (1, 16, 21) comprend :
une butée de manchon (21) pour retenir la cartouche à pointe (35) comprenant une paire de crochets (24) pour le verrouillage avec l'ensemble douille (70) et un arrêt (27) ; et
un manchon (1, 16) qui est adapté pour s'accoupler avec la butée de manchon (21), dans lequel le manchon (1, 16) définit une paire de découpes (8) dans une première extrémité pour accepter les crochets (24) et une seconde extrémité (15) qui s'appuie contre l'arrêt (27) de la butée de manchon (21),
dans lequel l'ensemble manchon (1, 16, 21) bloque la cartouche à pointe (35) de façon fixable par le mécanisme de retenue de pointe (39), de sorte que la cartouche à pointe (35) est adaptée pour s'accoupler de façon coulissante avec l'ensemble douille (70), permettant ainsi l'établissement d'un contact électrique avec l'ensemble douille (70) ;
dans lequel l'ensemble manchon (1, 16, 21) et l'ensemble douille (70) sont en prise et verrouillés l'un sur l'autre par les crochets (24) ; et
dans lequel les crochets (24) sont situés à distance d'une poignée.

2. Fer à souder du type à cartouche selon la revendication 1, dans lequel :
la première extrémité définit une première extrémité de pointe (7, 7a) et une seconde extrémité de pointe (11, 11a) ; et
la butée de manchon (21) est capable de s'accoupler au manchon (1, 16), dans lequel la première extrémité accepte les crochets (24) entre la première extrémité de pointe (7, 7a) et la seconde extrémité de pointe (11, 11a) respectivement.

3. Fer à souder du type à cartouche selon les revendications 1 ou 2, dans lequel
la paire de découpes (8) est définie entre la première extrémité de pointe (7, 7a) et la seconde extrémité de pointe (11, 11a) formée sur la première extrémité du manchon (1, 16).

4. Fer à souder du type à cartouche selon les revendications 1 ou 2, dans lequel le manchon (1, 16) présente une circonférence hexagonale, une circonférence polygonale ou une circonférence circulaire.

5. Fer à souder du type à cartouche selon les revendications 1 ou 2, dans lequel le manchon (1, 16) est constitué de mousse imprégnée de carbone, de caoutchouc, d'élastomère, de polypropylène, de plastique ou de liège.

6. Fer à souder du type à cartouche selon les revendications 1 ou 2, dans lequel le manchon (1, 16) contient au moins un matériau antistatique et/ou un matériau antimicrobien.

7. Fer à souder du type à cartouche selon la revendication 1, dans lequel l'ensemble douille (70) comprend une paire d'ouvertures (40) pour le verrouillage avec les crochets (24).

8. Fer à souder du type à cartouche selon la revendication 1, dans lequel le crochet (24) comprend une pointe (23) et un bouton (24a) et chacune des pointes (23) est en prise avec l'ensemble douille (70).
